# EUROPÄISCHE PATENTANMELDUNG

(11) **EP 2 736 245 A1**
(43) Veröffentlichungstag der Anmeldung: **28.05.2014**
(21) Anmeldenummer: 12007956.1
(22) Anmeldetag: 26.11.2012
(51) Int. Cl.: H04N 1/32, H04N 1/44

(54) **Verfahren zur Erstellung eines gedruckten Dokuments mit einer Kodierung, Dokument mit einer Kodierung sowie Verwendung eines Dokuments mit Kodierung**

(71) Anmelder: Lang, Jürgen, 51429 Bergisch Gladbach (DE)
(72) Erfinder: Lang, Jürgen, 51429 Bergisch Gladbach (DE)

(57) **Zusammenfassung**

Die Erfindung betrifft ein Verfahren zur Erstellung eines gedruckten Dokuments aus strukturierten Daten, wie sie z.B. in elektronischen Datenverarbeitungsanlagen vorliegen, sowie ein mit dem Verfahren erstellbares Dokument mit einer Kodierung. Parallel zum Druck des Dokuments werden die dem Druck zugrunde liegenden korrespondierenden Daten digital gespeichert und Informationen zum Abruf dieser Daten, wie beispielsweise der Speicherort der Daten, in einem maschinenlesbaren Code eingebunden, der gemeinsam mit dem zu druckenden Dokument ausgedruckt wird. Ein Besitzer eines auf diese Weise erstellten Dokuments kann den maschinenlesbaren Code einlesen und damit automatisiert auf die digtial gespeicherten korrespondieren Daten zugreifen. Durch die Erfindung wird dem Besitzer des gedruckten Dokuments die direkte elektronische Weiterverarbeitung des Dokuments auf Basis der ursprünglichen zu den Druckdaten korrespondierenden strukturierten Daten ermöglicht.

## Beschreibung

### Technisches Gebiet

Die Erfindung betrifft ein Verfahren zur Erstellung eines gedruckten Dokuments aus strukturierten Daten, wie sie z.B. in elektronischen Datenverarbeitungsanlagen vorliegen, sowie ein mit dem Verfahren erstellbares Dokument mit einer Kodierung. Die Erfindung betrifft weiter die Verwendung eines durch obiges Verfahren erstellbaren Dokuments mit einer Kodierung zum Abruf der korrespondierenden strukturierten Daten. Durch die Erfindung wird dem Besitzer des gedruckten Dokuments die direkte elektronische Weiterverarbeitung des Dokuments auf Basis der ursprünglichen zu den Druckdaten korrespondierenden strukturierten Daten ermöglicht.

### Stand der Technik

Es ist bekannt, gedruckte Dokumente einzuscannen, zu digitalisieren und mit Verfahren der Mustererkennung wie z.B. Optical Character Recognition (OCR) in weiter verarbeitbare strukturierte digitale Dokumente (wie z.B. Dokumente im bekannten Word-Format) umzuwandeln. Leider gehen die strukturierten Daten, die einem Druck zugrunde liegen, beim Ausdruck weitgehend verloren. Daher ist dieser Prozess, die Daten aus dem Ausdruck zu bestimmen mühsam und fehleranfällig. Ebenso ist er grundsätzlich nicht geeignet, die ursprünglichen dem Druck des Dokuments zugrunde liegenden Daten zurückzugewinnen. Vielmehr wird lediglich eine Annäherung an die Quelldaten in dem Sinne erzielt, dass der Ausdruck aus den per OCR gewonnenen Daten zu einem optisch ähnlichen Ergebnis führt wie der Ausdruck aus den Originaldaten.

Die Aufbringung von Kodierungen auf gedruckte Dokumente ist ebenfalls bekannt.

Es ist zum Beispiel bekannt, sogenannte Sortiercodes auf Druckstücke aufzubringen, um zusammengehörige Dokumente beim Druck eindeutig zu kennzeichnen oder um Dokumente eines bestimmten Typs zu kennzeichnen. Solche Codes geben folglich Auskunft über einen Typ von Dokument oder eine bestimmte Sendung, geben jedoch keine Auskunft über den strukturierten Dateninhalt des Dokuments.

Es ist ebenfalls bekannt, Bearbeitungscodes oder Frankierungen auf Dokumente oder Verpackungen (wie z.B. Briefumschläge) aufzudrucken, um die automatisierte Bearbeitung zu ermöglichen oder zu verbessern. Solche Bearbeitungscodes beinhalten typischerweise logistische Informationen z.B. über Versandarten, oder Adressinformationen des Empfängers einer Postsendung. Solche Codes geben keine erschöpfende Auskunft über den Inhalt des damit markierten Dokuments.

Es ist ebenfalls bekannt, QR-Codes als Verweiscodes einzusetzen, die eine URL enthalten und damit auf Inhalte verweisen, die im internet bereitgestellt werden. Solche QR-Codes werden häufig in der Werbung eingesetzt und verweisen grundsätzlich nicht auf das Dokument selbst, sondern auf zusätzliche und möglicherweise auch aktuellere Information, die auf dem gedruckten Dokument nicht enthalten ist. Somit sind die Inhalte des Dokuments und die Inhalte, auf die im Internet verwiesen werden, vollständig voneinander unabhängig. Da der Code nur einen Verweis beinhaltet, können sich insbesondere die Inhalte im Internet, auf die sich dieser Verweis richtet, jederzeit unabhängig vom Ausgangsdokument beliebig ändern, so dass eine verlässliche strukturierte Auswertbarkeit entfällt. Zudem sind solche Internet-Inhalte in der Regel ungesichert. Falls eine Absicherung besteht, ist diese in der Regel nicht Bestandteil des Codes und muss vom Abrufer auf anderem Wege mühsam separat in Erfahrung gebracht werden.

### Aufgabe

Es stellt sich somit die Aufgabe, ein Verfahren zu schaffen, das dem Besitzer bzw. Nutzer eines gedruckten Dokuments ermöglicht, auf die dem Druck des Dokuments zugrunde liegenden Daten auf einfache und auf wenig fehleranfällige Weise zum Zweck der Weiterverarbeitung zugreifen zu können.

### Lösung

Verfahrensseitig wird die Aufgabe durch ein Verfahren zur Erstellung eines gedruckten Dokuments mit einem maschinen lesbaren Code nach Anspruch 1 sowie durch ein Verfahren zur Verwendung eines Dokuments mit einem maschinenlesbaren Code nach Anspruch 5 gelöst. Vorrichtungsseitig wird die Aufgabe durch ein gedrucktes Dokument mit einem maschinenlesbaren Code nach Anspruch 7 gelöst.

### Vorteile des vorgestellten Verfahrens

Das erfindungsgemäße Verfahren erlaubt es, eine "elektronische Kopie" der wesentlichen Dateninhalte eines gedruckten Dokuments in einem Datenspeicher abrufbar zu halten. Bei dem Datenspeicher kann es sich beispielsweise um einen an das Internet angeschlossenen Server halten, wodurch es dem Inhaber des gedruckten Dokuments möglich wird, die "elektronische Kopie" des ihm vorliegenden Dokuments auf einfache Weise über das internet abzurufen.

Weiter unten vorgestellte vorteilhafte Weiterbildungen der Erfindung umfassen Sicherheitsmechanismen, mit denen sichergestellt werden kann, dass die Daten nur vom Dokumentinhaber (also demjenigen, dem der gedruckte Code vorliegt) und nicht von unberechtigten Dritten abgerufen und ausgewertet werden können.

Die Erfindung umfasst zwei durch einen gemeinsamen erfinderischen Gedanken verbundene Verfahren, nämlich einerseits ein Verfahren, in dem parallel zum Druck eines physikalischen Dokuments eine virtuelle (elektronische, digitale) Kopie des Dokuments in einem Datenspeicher gesichert wird, und beim Druck des physikalischen Dokuments ein maschinenlesbarer Verweis auf eben diese elektronische Kopie mit auf das Dokument aufgebracht wird. Dieses Verfahren wird beim Dokumentenersteller (A) verwendet.

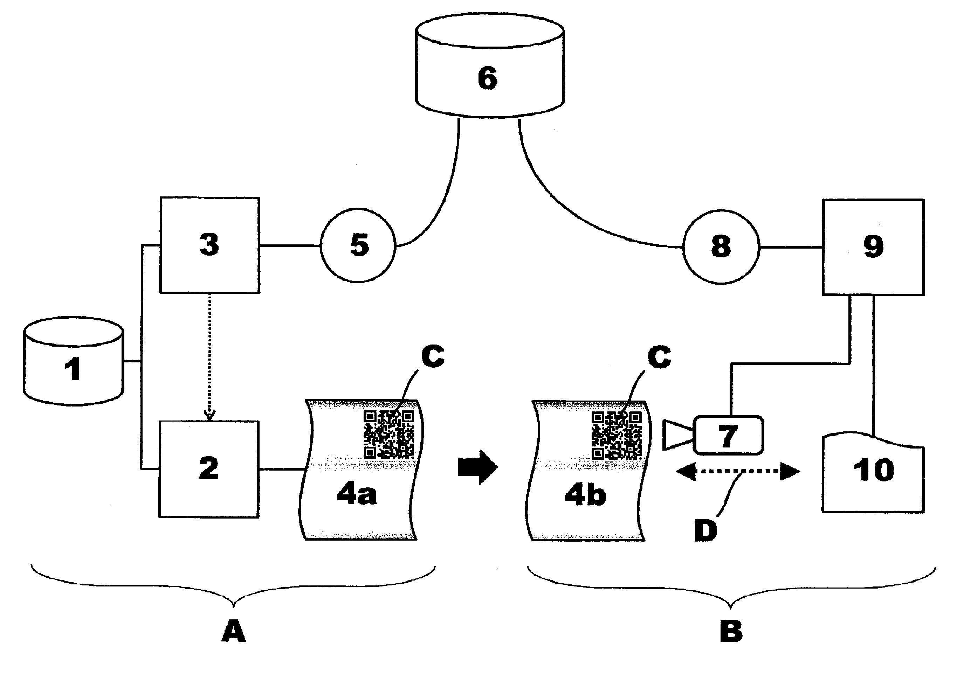

Andererseits umfasst die Erfindung ein Verfahren, das beim Dokumentinhaber (B) (also dem Besitzer eines Dokuments, das mit dem oben genannten Verfahren erstellt wurde) abläuft, und bei dem der maschinenlesbare Verweis auf dem gedruckten Dokument dazu verwendet wird, eine zum Dokument korrespondiere digitale Kopie aus dem Datenspeicher abzurufen.
Im Folgenden wird ein Ausführungsbeispiel der Erfindung anhand der anliegenden Zeichnung erläutert. Die Fig.1 zeigt in schematischer Darstellung ein System, mit dem die erfindungsgemäßen Verfahren durchgeführt werden können.

### Verfahren zur Dokumenterstellung

Beim erfindungsgemäßen Verfahren zur Erstellung eines gedruckten Dokuments (4a, 4b) mit einer Kodierung soll beim Dokumentenersteller (A) aus einer Datenquelle (1) der Ausdruck eines Dokuments (4a, 4b) erfolgen.

Die zu druckenden Daten (Druckdaten) werden von der Datenquelle (1) in ein Druckmodul (2) übergeben. In diesem Druckmodul (2) sind die Vorbereitung auf den Ausdruck (die sogenannte Druckaufbereitung) und der eigentliche Druckvorgang selbst zusammengefasst. Üblicherweise erfolgt im Rahmen der Druckaufbereitung eine Übersetzung in eine vom Drucksystem verständliche Beschreibungssprache.

Ebenfalls kann die Hinzuziehung von typischem Druckinhalt erfolgen, wie z.B. die Ergänzung um ein Logo oder eine stets gleichartige Fußzeile von Briefen. Die DruckAufbereitung mündet in den physischen Druck. Hierbei ist es unerheblich, ob der Ausdruck lokal erfolgt oder ob entfernte Drucksysteme beliebigen Typs zum Einsatz kommen, etwa zentralisierte Druckzentren.

Außerdem erfolgt eine Übergabe von Daten von der Datenquelle (1) an ein Datenaufbereitungsmodul (3). Vorteilhafterweise ist die Übergabe der Daten an das Datenaufbereitungsmodul (3) mit der Übertragung an das Druckmodul (2) synchronisiert, d.h. die beiden Datenübertragungen erfolgen im Wesentlichen gleichzeitig bzw. in engem zeitlichen Zusammenhang. Es ist aber auch durchaus möglich, dass die Daten in größerem Zeitabstand an die beiden Module (2,3) verschickt werden. Dabei ist es unerheblich, ob die Daten zuerst an das Druckmodul (2) oder zuerst an das Datenaufbereitungsmodul (3) übergeben werden.

Die an das Datenautbereitungsmodul (3) übergebenen Daten korrespondieren zu den Druckdaten, d.h. sie entsprechen dem Inhalt des gedruckten Dokuments. Insbesondere können diese Daten auch mit den Druckdaten identisch sein, müssen dies aber nicht. In der Regel handelt es sich bei den an das
Datenaufbereitungsmodul (3) übergebenen Daten um strukturierte Daten.

Das Datenaufbereitungsmodul (3) übergibt die ihm übergebenen Daten entweder in unveränderter oder in aufbereiteter Form über eine Sendeeinheit (5) an einen Datenspeicher (6), in dem die übergebenen Daten gespeichert werden.

Der Datenspeicher (6) gibt Ergebnisdaten der Speicherung an das Datenaufbereitungsmodul (3) über den Kommunikationsweg der Sendeeinheit (5) zurück. Aus dem Speichervorgang der im Datenspeicher (6) zu speichernden Daten ermittelt das Datenaufbereitungsmodul (3) Speicherortinformationen zurück.

Hierbei ist es unerheblich, ob es sich bei diesen Speicherortinformationen um Informationen handelt, die der Datenspeicher (6) im Rahmen der Datenspeicherung ermittelt und über die Sendeeinheit (5) an das Datenaufbereitungsmodul (3) zurück übermittelt oder ob es sich um Speicherortinformationen handelt, die das Datenaufbereitungsmodul (3) selbst ermittelt, und die im Rahmen der Speicherung im Datenspeicher (6) von diesem bestätigt werden.

Es kann vorteilhaft sein, wenn die Speicherortinformationen auch Füllinformationen umfassen, die den unberechtigten Datenabruf erschweren. Vorzugsweise werden Füllinformationen so eingesetzt, dass ein Erraten gültiger Speicherortinformationen erheblich erschwert wird.

Die Speicherortinformationen werden vom Datenaufbereitungsmodul (3) in aufbereiteter Form an das Druckmodul (2) übergeben. Als Ergebnis der Datenaufbereitung werden Daten erzeugt, die eine Erweiterung des Druckumfangs in dem Sinne ermöglichen, dass eine maschinenlesbare Kodierung, die die Speicherortinformationen enthält, zusammen mit den anderen Druckdaten ausgedruckt wird.

Diese maschinenlesbare Kodierung, die Informationen über den Speicherort der zugehörigen Daten im Datenspeicher (6) enthält, wird kurz "Code" (C) genannt. Es versteht sich, dass der Code (C) neben den Informationen zum Speicherort auch weitere Informationen enthalten kann.
Es wird also vom Datenaufbereitungsmodul (3) eine Datenaufbereitung so durchgeführt und das Ergebnis dieser Datenaufbereitung an das Druckmodul (2) so übermittelt, dass der Druckumfang um den maschinenlesbaren Code (C) erweitert wird.

Zuletzt werden die um den Code (C) erweiterten Druckdaten des Dokuments vom Druckmodul ausgedruckt und man erhält das gedruckte Dokument (4a), das neben den eigentlichen Druckinformationen zusätzlich die maschinenlesbare Markierung (C) umfasst, wobei in dem Code (C) Speicherortinformation zu im Datenspeicher (6) abgelegten zum Druckdokument korrespondierenden Daten enthält.

Als Ergebnis des beschriebenen Verfahrens beim Dokumentersteller (A) zur Dokumenterstellung liegt zum einen ein gedrucktes Dokument vor (4a), das einen Code (C) umfasst. Zum anderen sind korrespondierende Daten (D) zum gedruckten Dokument im Datenspeicher (6) abgelegt. Die korrespondierenden Daten (D) können in verschlüsselter Form im Datenspeicher (6) abgelegt sein. Vorteilhafte Ausgestaltungen des Verfahrens, die eine Verschlüsselung beinhalten sind weiter unten beschrieben.

Es versteht sich, dass es bezüglich des auszudruckenden Dokuments (4a) für die Erfindung unerheblich ist, ob es sich um einen Ausdruck eines einzelnen oder um den Ausdruck mehrerer verschiedener Dokumente handelt. Ebenso ist unerheblich, ob das einzelne und/oder die verschiedenen Dokumente aus einer oder mehreren Druckseiten bestehen und welche Farb- oder Schwarzweiß-Drucktechnik zum Einsatz kommen soll. Ebenso ist es unerheblich, ob der Aufdruck des Codes (C) auf dem Dokument selbst oder auf einem zusätzlichen Druckblatt erfolgt, das dem Dokument zugefügt wird.

### Verfahren zur Dokumentverwendung

Beim erfindungsgemäßen Verfahren zur Verwendung eines gedruckten Dokuments (4a,4b) mit einem Code (C) sollen dem Dokumenteninhaber (B) zu den dem gedruckten Dokument zugehörigen Druckdaten korrespondierende Daten aus dem Datenspeicher (6) zugänglich gemacht werden.

Dabei liegt dem Dokumenteninhaber (B) zunächst das gedruckte Dokument (4b) vor. Dabei kommt es auf die Art des Dokuments nicht an, und es ist zum Beispiel unerheblich, ob das gedruckte Dokument beispielsweise als Brief eintrifft oder als Druckwerk (z.B. als Buch) zur Verfügung steht.

Das vorliegende gedruckte Dokument (4b) entspricht weitgehend dem einst gedruckten Dokument (4a). Etwaige Veränderungen im Dokument wie handschriftliche oder drucktechnische Ergänzungen, Stempelungen oder Veränderung von Druck und/oder Papier durch Alterung oder mechanische Einwirkungen sind dabei unerheblich. Relevant ist lediglich, dass der maschinenlesbare Code (C) weiterhin lesbar ist.

Im Stand der Technik sind Symbologien und Verfahren lange bekannt, die solche Redundanzen und Fehlerkorrekturmechanismen im Code (C) bereitstellen, dass zum einen von einer vollständigen maschinellen Lesbarkeit und darüber hinaus von einer Identität des Dateninhalts des Codes (C) auf dem gedruckten Dokument (4a) und dem später vorliegenden Dokument (4b) ausgegangen werden kann. Dies gilt z.B. für normgerechte QR-Codes, Data Matrix Codes, Aztec Codes und für eine Vielzahl weiterer Matrixcodes.

Bei vorliegendem Druckdokument (4b) wird der Code (C) mittels eines Scanners (7) ausgelesen. Dazu kann ein handelsüblicher kamerabasierter Scanner verwendet werden, aber auch andere Scan-Technologien wie z.B. Rasterscanner können eingesetzt werden. Das Auslesen des Codes (C) beinhaltet seine Auswertung, so dass der Scanner (7) an das Datenverarbeitungsmodul (9) den elektronischen Inhalt des Codes (C) übermittelt. Der elektronische Inhalt des Codes (C) liegt anschließend in korrekter Form vor, wobei regelmäßig davon ausgegangen werden kann, dass dieser Inhalt identisch ist mit dem Inhalt, der vom Druckmodul (2) auf den Code (C) des Dokuments aufgedruckt wurde.

Das Datenverarbeitungsmodul (9) wertet den Inhalt des Codes (C) aus. Bei dieser Auswertung ermittelt das Datenverarbeitungsmodul (9) die im Code (C) enthaltene Speicherortinformation sowie ggf. weitere im Code (C) enthaltenen Informationen. Bei diesen weiteren Informationen kann es sich beispielsweise um Authentisierungsinformationen handeln, z.B. um Hinweise auf eine Verschlüsselung der Daten und evtl. für eine Datenentschlüsselung notwendige Schlüssel. Ebenso können z.B. digitale Fingerabdrücke oder elektronische Signaturen im Code (C) enthalten und vom Datenverarbeitungsmodul (9) ermittelt werden.

Das Datenverarbeitungsmodul (9) ruft auf Basis der im Code (C) enthaltenen Informationen (Speicherortinformation und gegebenenfalls enthaltenen zusätzlichen Authentisierungsinformationen) unter Nutzung einer Abrufeinheit (8) die am im Code (C) codierten Speicherort hinterlegten Daten vom Datenspeicher (6) ab. Nach diesem Abruf liegen die zuvor im Datenspeicher (6) gespeicherten Daten als Kopie im Datenverarbeitungsmodul (9) vor.

Zum Abschluss werden die Daten (10) dem Dokumenteninhaber (B) bereitgestellt und können von diesem weiter verwendet werden. Hierbei ist es unerheblich, ob die Bereitstellung die Anzeige an einem Bildschirm und/oder die Darbietung in einer Weise umfasst, die die elektronische Weiterverarbeitung in Folgesystemen ermöglicht. Bei den elektronisch abgerufenen Daten handelt es sich um Daten die mit dem vorliegenden gedruckten Dokument korrespondieren (D). Wer auch immer im Besitz des Dokuments ist, hat auch Zugriff auf die korrespondierenden elektronischen Daten uns muss daher die gedruckten Daten nicht manuell oder über einen fehlerträchtigen OCR-Prozess einlesen.

### Ausführungsformen mit Datenabsicherung

Die vorgestellten Verfahren können derart vorteilhaft weitergebildet werden, dass sie auch Maßnahmen zur Absicherung der Daten (D) im Datenspeicher (6) vor unberechtigtem Abruf umfassen. Dabei ist es besonders vorteilhaft, wenn sich Personen, die im Besitz eines erfindungsgemäß erstellten Dokuments (4a, 4b) sind, dieses Dokument verwenden können, um die Berechtigung zum Abruf der korrespondierenden Daten (D) nachzuweisen. Es ist möglich, das Verfahren so zu gestalten, dass der Besitz des Dokuments alleine zum Abruf der Daten berechtigt.

Es ist aber ebenso möglich, dass der Besitz des Dokuments nur eine notwendige aber nicht hinreichende Bedingung darstellt, um Erlaubnis zum Abruf der Daten zu erhalten. Im letzteren Fall wären weitere Bedingungen zu erfüllen, um den Abruf zu ermöglichen, die beispielsweise weitere Autorisierungs- bzw. Authentisierungsmaßnahmen und/oder die Prüfung von Regeln, wie sie üblicherweise in einem Rechtemanagementsystem hinterlegt sind, umfassen können.

Um die Abrufberechtigung der Daten (D) an den Besitz des Dokuments (4a,4b) zu binden, können im Rahmen der Datenaufbereitung Authentisierungsinformationen ermittelt werden, die für einen späteren Abruf der Daten aus dem Datenspeicher erforderlich sind und in den gedruckten Code (C) einfließen.

Dazu kann die Datenaufbereitung beispielsweise Verfahren zur Verschlüsselung der im Datenspeicher (6) zu speichernden Daten, Verfahren zur Erstellung eines sog. digitalen Fingerabdrucks und/oder einer elektronischen Signatur der im Datenspeicher (6) zu speichernden Daten umfassen.

Hierbei ist es unerheblich, ob diese Verfahren zur Verschlüsselung und zur Aufbringung des digitalen Fingerabdrucks oder der elektronischen Signatur im Datenaufbereitungsmodul (3), in der Sendeeinheit (5) oder im Datenspeicher (6) erfolgen.

So ist es beispielsweise möglich, den Abruf der Daten (D) z.B. von einer erfolgreichen Entschlüsselung oder einem positiv erfolgten Identitätsvergleich eines Fingerabdrucks oder einer Signatur abhängig zu machen. Dadurch kann einem Besitzer eines Dokuments mit gedrucktem Code (C) der Abruf der Daten (D) versagt werden, wenn der Identhätsvergleich fehlschlägt. Dies ist besonders dann vorteilhaft, wenn möglicherweise verschiedene Bearbeitungen oder Revisionsstände eines Dokuments bestehen können, die aber am gleichen Speicherort abgelegt werden. Mit den vorgestellten Maßnahmen wird es ermöglicht, den Abruf der Daten (D) nur denjenigen Benutzern zu erlauben, die das korrespondierende Dokument (4a, 4b) in der gleichen Fassung besitzen.

Sowohl die Verschlüsselung als auch die Aufbringung eines digitalen Fingerabdrucks oder einer elektronischen Signatur ist optional. Das bedeutet, dass jede Kombination von verschlüsselter oder unverschlüsselter Speicherung mit oder ohne digitalen Fingerabdruck bzw. elektronischer Signatur möglich ist. Im Folgenden wird der bevorzugte Fall betrachtet, dass sowohl eine Verschlüsselung als auch ein digitaler Fingerabdruck oder eine elektronische Signatur durchgeführt werden.

Der gedruckte Code (C) umfasst somit in einer der bevorzugten Ausführungsformen mit Datenabsicherung nicht nur die Speicherortinformationen der im Datenspeicher (6) gespeicherten Daten. Er enthält zusätzlich Authentisierungsinformationen. Solche Authentisierungsinformationen können beispielsweise Hinweise zur Entschlüsselung, von in verschlüsselter Form im Datenspeicher (6) vorliegenden Daten (D) - vorzugsweise den Schlüssel selbst - umfassen.

Ebenso kann der Code (C) einen digitalen Fingerabdruck, eine elektronische Signatur oder definierte Teile hiervon umfassen. Außerdem kann der Code (C) im Falle einer elektronischen Signatur Hinweise auf die Signaturprüfung, vorzugsweise ein Zertifikat, einen öffentlichen Schlüssel oder Verweise darauf umfassen.

Außerdem kann der Code (C) ggf. weitere Authentisierungsinformationen für den späteren Datenabruf am Datenspeicher (6) enthalten.

Im Folgenden werden verschiedene vorteilhafte Ausgestaltungen der Erfindung bezüglich der Authentisierungsmaßnahmen und Authentisierungsinformationen detailliert beschrieben.

### Verschlüsselung

Die Daten (D) im Datenspeicher können mit einem bekannten Verschlüsselungsverfahren verschlüsselt werden. Dabei verwendet das Datenaufbereitungsmodul (3) einen Schlüssel zur Verschlüsselung der im Datenspeicher (6) abzulegenden Daten. Hierbei ist es unerheblich, welches Verschlüsselungsverfahren zum Einsatz kommt. Insbesondere eignen sich symmetrische Verfahren. Alternativ sind auch asymmetrische oder andere Verfahren möglich. Weiterhin ist unerheblich, um welchen Schlüssel es sich handelt. Fest vergebene Schlüssel sind ebenso möglich wie zufällig erzeugte Schlüssel. Ebenfalls ist es unerheblich, ob die verwendeten Schlüssel nur für eine Verschlüsselung oder mehrfach verwendet werden. Der eigentliche Vorgang der Verschlüsselung kann lokal im Datenaufbereitungsmodul (3), in der Sendeeinheit (5) oder im Datenspeicher (6) erfolgen.

Damit der Besitzer des Dokuments (4a, 4b) die im Datenspeicher (6) in verschlüsselter Form vorliegenden Daten (D) in unverschlüsselter Form weiterverwenden kann, wird ein Entschlüsselungshinweis verwendet, der vom Datenaufbereitungsmodul (3) an das Druckmodul (2) übermittelt wird und in den gedruckten Code (C) einfließt, und somit dem Besitzer des gedruckten Dokuments vorliegt.

Bei diesem Entschlüsselungshinweis handelt es sich um einen Hinweis, wie die Daten entschlüsselt werden können. Dieser Hinweis kann entweder den zur Entschlüsselung erforderlichen Schlüssel umfassen oder aber einen Verweis auf den Schlüssel, der zur Entschlüsselung herangezogen werden muss.

Wenn die im Datenspeicher (6) abgelegten und von diesem Datenspeicher abgerufenen Daten wie vor beschrieben verschlüsselt sind, verwendet das Datenverarbeitungsmodul (9) den im Code (C) enthaltenen Entschlüsselungshinweis (z.B. den Schlüssel selbst oder einen Verweis auf diesen Schlüssel), um eine Entschlüsselung durchzuführen.

Falls es sich bei dem Hinweis auf den Schlüssel nicht um den Schlüssel selbst, sondern um einen Verweis auf den Schlüssel handelt, ermittelt das Datenverarbeitungsmodul auf Basis dieses Verweises den Schlüssel. Nach der Entschlüsselung liegen die Daten im Datenverarbeitungsmodul (6) in unverschlüsselter Weise vor. Die eigentliche Entschlüsselung kann lokal im Datenaufbereitungsmodul (3) oder im Datenspeicher (6) erfolgen.

### Digitaler Fingerabdruck / Elektronische Signatur

Die Daten (D) im Datenspeicher können auch mit einem digitalen Fingerabdruck oder einer elektronischen Signatur gesichert werden. Verfahren zur Erstellung solcher Fingerabdrücke oder Signaturen sind im Stand der Technik bekannt.
Dazu ermittelt das Datenaufbereitungsmodul (3) aus den im Datenspeicher (6) zu speichernden Daten einen digitalen Fingerabdruck. Hierbei ist es unerheblich, welches Verfahren im Einzelnen zur Erstellung eines digitalen Fingerabdrucks zum Einsatz kommt.

Im Falle einer elektronischen Signatur wird dieser Fingerabdruck mit einem Schlüssel, der dem Dokumentenersteller (A) oder dessen Systemen zugeordnet werden kann, verschlüsselt. Die eigentliche Erstellung des digitalen Fingerabdrucks oder der elektronischen Signatur kann lokal im Datenaufbereitungsmodul (3) oder im Datenspeicher (6) erfolgen.

Im Falle der Nutzung eines digitalen Fingerabdrucks oder einer elektronischen Signatur übermittelt das Datenaufbereitungsmodul (3) den ermittelten digitalen Fingerabdruck oder die elektronische Signatur an das Druckmodul (2). Dieser digitale Fingerabdruck bzw. die elektronische Signatur oder Teile des digitalen Fingerabdrucks oder der elektronischen Signatur fließen in den gedruckten Code (C) ein.

Wenn eine elektronische Signatur (also ein verschlüsselter Fingerabdruck) verwendet wird, fließen auch Signaturprüfungshinweise, also Hinweise auf die Prüfung dieser Signatur in den Code (C) ein. Hierbei kann es sich beispielsweise um ein Zertifikat des Dokumenterstellers (A), den öffentlichen Schlüssel, den der Dokumentersteller verwendet hat oder um einen Hinweis auf die Erlangung des Zertifikats oder des Schlüssels des Dokumenterstellers (A) handeln.

Wenn ein digitaler Fingerabdruck oder eine elektronische Signatur bei der Dokumenterstellung und Speicherung erstellt wurde und dieser Fingerabdruck bzw. diese Signatur im Code (C) enthalten ist, erstellt das Datenverarbeitungsmodul (9) nach gleichem Verfahren einen entsprechenden digitalen Fingerabdruck.

Im Falle eines im Code (C) enthaltenen (nicht verschlüsselten) digitalen Fingerabdrucks vergleicht das Datenverarbeitungsmodul (9) die Identität der beiden digitalen Fingerabdrücke, um festzustellen, ob die gespeicherten Daten zwischen dem Zeitpunkt des Erstellens des digitalen Fingerabdrucks und nun betrachteten Zeitpunkt der Prüfung verändert wurden.

Im Falle einer im Code (C) enthaltenen digitalen Signatur (also eines verschlüsselten Fingerabdrucks) erfolgt zuvor die Entschlüsselung der Signatur unter Verwendung der im Code (C) enthaltenen Signaturprüfungshinweise.

Ansonsten läuft das Verfahren ab wie im Zusammenhang mit dem unverschlüsselten Fingerabdruck oben beschreiben, nämlich durch Vergleich mit einem selbst erstellten digitalen Fingerabdruck. Zur Entschlüsselung der Signatur werden die im Code enthaltenen Hinweise zur Signaturprüfung genutzt. Die Prüfung von digitalem Fingerabdruck oder elektronischer Signatur kann lokal im Datenaufbereitungsmodul (3) oder im Datenspeicher (6) erfolgen.

Im Folgenden wird die Durchführung des Verfahrens beispielhaft an einem praktischen Anwendungsfall erläutert.

### Beispielhafte Durchführung des Verfahrens

In einem Datenverarbeitungssystem (1) werden Rechnungsdaten (D) generiert und in einem Internet-Datenspeicher (6) in verschlüsselter Form abgelegt. Dabei kann dieser Internet-Datenspeicher Teil des Datenverarbeitungssystems sein oder in einem eigenständigen Datenverarbeitungssystem realisiert sein. Durch die Verschlüsselung ist sichergestellt, dass die Rechnungsdaten nicht von jedermann mit Zugriff auf den Internet-Datenspeicher eingesehen werden können. Um die Daten einzusehen ist vielmehr ein Schlüssel erforderlich, der dem Rechnungsempfänger, aber keinen unautorisierten Personen zugänglich gemacht wird.

Parallel zur Speicherung der verschlüsselten Daten im Internet-Datenspeicher (6) erfolgt der Ausdruck einer Rechnung (4a) aus dem Datenverarbeitungssystem (1), auf der beim Ausdruck nach dem beschriebenen Verfahren ein sogenannter "CloudKopy Code" (C) in Form eines Matrixcodes mit ausgedruckt wird. Dieser Matrixcode enthält sowohl Speicherortinformationen als auch Entschlüsselungshinweise, um dem Rechnungsempfänger den Abruf der Rechnungsdaten (D) zu ermöglichen.

Der Rechnungsempfänger erhält die gedruckte Rechnung mit dem aufgedrucktem Code. Der Rechnungsempfänger oder ein mit der Buchhaltung beauftragter Dritter liest den Code mit einem geeigneten Scanner (7) ein.

Auf Basis der aus dem Code eingelesenen Speicherortinformation und den eingelesenen Entschlüsselungshinweise werden die Rechnungsdaten (D) als strukturierte elektronische Daten, aus dem Internet-Datenspeicher abgerufen.

Diese aus dem Internet-Datenspeicher abgerufenen Daten (D) korrespondieren mit den Daten der vorliegenden gedruckten Rechnung und können direkt vom Rechnungsempfänger oder dem mit der Buchhaltung beauftragten Dritten z.B. in einem Buchhaltungsprogramm elektronisch weiterverarbeitet werden.

Durch die Nutzung der elektronischen Daten werden dem Rechnungsempfänger oder dem mit der Buchhaltung beauftragten Dritten die fehlerträchtige manuelle Eingabe der Rechnungsdaten oder ein ebenfalls fehleranfälliger OCR-Prozess erspart.

## Patentansprüche

1. Verfahren zur Erstellung eines gedruckten Dokuments (4a, 4b) mit einem maschinenlesbaren Code (C) aus Daten einer Datenquelle (1)
**dadurch gekennzeichnet, dass**
1. die Daten von der Datenquelle (1) in ein Druckmodul (2) übergeben werden,
2. die Daten von der Datenquelle (1) oder zu diesen Daten korrespondierende Daten (D), die dem Inhalt des zu druckenden Dokuments entsprechen, an ein Datenaufbereitungsmodul (3) übergeben werden,
3. die Daten (D) in unveränderter oder in aufbereiteter Form an einen Datenspeicher (6) übergeben und in diesem gespeichert werden,
4. Speicherortinformationen der im Datenspeicher (6) gespeicherten Daten vom Datenspeicher (6) ermittelt oder bestätigt werden,
5. die Daten im Datenaufbereitungsmodul (3) aufbereitet und so an das Druckmodul (2) übergeben werden, dass eine Erweiterung des Druckumfangs um einen maschinenlesbaren Code (C) erreicht wird, wobei der maschinenlesbare Code Speicherortinformationen zu den im Datenspeicher (6) abgelegten zum Druckdokument korrespondierenden Daten (D) enthält,
6. die um den Code (C) erweiterten Druckdaten vom Druckmodul (2) ausgedruckt werden.

2. Verfahren nach Anspruch 1,
**dadurch gekennzeichnet, dass**
Authentisierungsinformationen ermittelt werden und in den gedruckten Code (C) einfließen.

3. Verfahren nach Anspruch 2,
**dadurch gekennzeichnet, dass**
die Authentisierungsinformationen zumindest einen
Entschlüsselungshinweis zur Entschlüsselung der im Datenspeicher (6) vorliegenden Daten (D) umfassen.

4. Verfahren nach einem der Ansprüche 2 bis 3,
**dadurch gekennzeichnet, dass**
die Authentisierungsinformationen zumindest einen digitalen Fingerabdruck oder zumindest einen Signaturprüfungshinweis zur Integritätsprüfung der im Datenspeicher (6) vorliegenden Daten (D) umfassen.

5. Verwendung eines Dokuments mit einem Code (C), erhältlich durch ein Verfahren nach den Ansprüchen 1 bis 4
**dadurch gekennzeichnet, dass**
1. der Code (C) gelesen und der Inhalt des Codes (C) an ein Datenverarbeitungsmodul (9) übermittelt wird,
2. der Inhalt des Codes (C) ausgewertet und zumindest die'im Code (C) enthaltene Speicherortinformation ermittelt wird
3. auf Basis der aus dem Code (C) ermittelten Informationen die am ermittelten Speicherort hinterlegten Daten (D) vom Datenspeicher (6) abgerufen werden.

6. Verwendung eines Dokuments mit einem Code (C) nach Anspruch 5
**dadurch gekennzeichnet, dass**
bei der Auswertung des Codes (C) Authentisierungsinformationen ermittelt und zum Abruf der am ermittelten Speicherort hinterlegten Daten (D) hinzugezogen werden.

7. Gedrucktes Dokument mit einem maschinenlesbaren Code, erhältlich durch ein Verfahren nach den Ansprüchen 1 bis 4.

8. Computerprogramm, das Programmbefehle enthält, um das Verfahren nach einem der Ansprüche 1 bis 4 durchzuführen, wenn es in einer Datenverarbeitungsanlage abläuft.

9. Computerprogramm, das Programmbefehle enthält, um das Verfahren nach einem der Ansprüche 5 bis 7 durchzuführen, wenn es in einem Computer abläuft.
